# EUROPEAN PATENT APPLICATION

(11) **EP 4 470 360 A1**
(43) Date of publication of application: **04.12.2024**
(21) Application number: 24177478.5
(22) Date of filing: 22.05.2024
(51) Int. Cl.: A01D 46/20, A01D 46/30

(54) **A MOBILE AUTONOMOUS AGRICULTURAL SYSTEM**

(30) Priority: 02.06.2023 GB 202308251
(71) Applicant: S&A Group Holdings Limited, Hereford HR1 3ET (GB)
(72) Inventor: PALMER, Edward John Francis, Abbey Dore, HR2 0AE (GB); PERRETT, Daniel John Owen, Monmouth, NP25 5NT (GB); SMITH, Oliver Edward, Leominster, HR6 9HB (GB)
(74) Representative: Haseltine Lake Kempner LLP

(57) **Abstract**

There is disclosed a mobile autonomous agricultural system (10) comprising a powered mobile unit (12) for carrying agricultural equipment, and configured to move along rows (40) of crops. The powered mobile unit (12) comprises a chassis (13) extending along a longitudinal axis (50) defining an inner zone (16) to receive the row of crops, and an actuator (26) which is moveable between a fully extended position and a fully retracted position to respectively raise or lower the height of the chassis (13) above the ground. At least one distance sensor (30) is disposed on the powered mobile unit (12) and configured output respective distance signals relating to the distance of objects from the respective distance sensor. A controller (20) is configured to receive the distance signals, and to control extension of each of the actuators (26) to control the height of the powered mobile unit (12) based on the distance signals.

## Description

The present invention relates to a mobile autonomous agricultural system and a method of controlling the same.

Mobile autonomous agricultural system typically have to navigate many obstacles, and when navigating across uneven ground, may also have to adapt attitude in order to stay level.

According to a first aspect, there is provided a mobile autonomous agricultural system comprising: a powered mobile unit for carrying agricultural equipment, and configured to move along rows of crops; the powered mobile unit comprising a chassis extending along a longitudinal axis defining an inner zone to receive the row of crops, and an actuator which is moveable between a fully extended position and a fully retracted position to respectively raise or lower the height of the chassis above the ground; at least one distance sensor disposed on the powered mobile unit and configured output respective distance signals relating to the distance of objects from the respective distance sensor; a controller configured to receive the distance signals, and to control extension of each of the actuators to control the height of the powered mobile unit based on the distance signals.

Controlling the height of the chassis based on signals from distance sensors enables the mobile autonomous unit to avoid collision with internal objects, such as plants or infrastructure within the inner section of the chassis when it is travelling over a row, or external objects, outside the inner section of the chassis, such as doors or overhead obstacles. Controlling the height of the chassis also enables the chassis to be kept at an optimum distance from the plants, for example if cameras or UV-C lights are disposed on the chassis, they may have a maximum useful distance from the plants. The actuator may be a linear actuator.

The mobile autonomous agricultural system may comprise a plurality of actuators. The chassis may be supported by a plurality of wheel units, wherein each wheel unit comprises a wheel and one of the plurality of actuators, wherein the respective actuator is disposed between the wheel and a wheel base of the chassis.

It may be that each wheel unit comprises a suspension assembly. It may be that the suspension assembly comprises a suspension unit with a passive spring around a shock absorber coupled to the wheel, and a linear actuator configured to move the suspension unit relative to the chassis of the mobile unit to thereby move the wheel relative to the wheel base of the chassis independently of the suspension unit.

It may be that the suspension assembly further comprises a four-bar linkage comprising a base, an input link, a coupler link and a follower link with the base and the coupler link on opposing sides of the four-bar linkage. It may be that the wheel is fixed to the coupler link. It may be that the linear actuator is coupled between the base and the input link such that extension of the linear actuator moves the coupler link, and thereby the wheel, away from the wheel based of the chassis and retraction of the linear actuator moves the coupler link, and thereby the wheel, towards the wheel base of the chassis.

It may be that the at least one distance sensor is disposed on the powered mobile unit to face into the inner section of the chassis, to sense internal objects within the inner section of the chassis.

It may be that the mobile autonomous agricultural system comprises at least two distance sensors, wherein the controller is configured to determine an average distance signal based on the distance signals received from the distance sensors, and to control the actuators to control the height of the powered mobile unit based on the average distance signal. The average distance signal may be the mean of the distance signals. Plants are notoriously non-uniform, so using an average distance signal will enable more accurate identification of potential obstacles in the inner section of the chassis.

It may be that the average distance signal is calculated based only on distance signals that are below an outlier threshold. This ensures that erroneous signals are ignored, or signals which indicate that the chassis has reached the end of a row are not used to control the height of the chassis.

It may be that the controller is configured to control the actuators to extend when it is determined that the distance signals are below a first threshold, to raise the height of the chassis. The distance signals being below the first threshold may be each and every distance signal being below the first threshold, or may be the average distance signal being below the first threshold. In some examples, the average distance signal compared against the first threshold may be based only on distance signals from a front of the chassis.

It may be that the controller is configured to control the actuators to retract when it is determined that the distance signals are above a second threshold, to lower the height of the chassis. The distance signals being above the second threshold may be each and every distance signal being above the second threshold, or may be the average distance signal being above the second threshold.

It may be that the first threshold is smaller than the second threshold.

It may be that controlling the extension of the actuators comprises controlling the actuators to incrementally extend or retract by a predefined first length to adjust the height of the chassis, and repeating receiving the distance signals and controlling the extension in a height feedback loop to control the height of the chassis.

It may be that the controller is configured to determining a pitch offset and/or a roll offset relative to a horizontal plane based on the attitude signals, and to control the attitude of the chassis based on the pitch offset and/or the roll offset. It may be that the actuators each comprise a travel defined by the change in length between the fully extended position and the fully retracted position, and wherein the control of extension of the actuators to control the height of the chassis is limited to a central portion of the travel. In other words, the control of extension of the actuators to control the height of the chassis may be limited to a proportion of the travel which is less than 1. The proportion may be less than 0.9, 0.8, 0.7, 0.6, 0.5, or any suitable value.

It may be that the controller is calibrated to zero height when the actuator is between the fully extended position and the fully retracted position, and wherein an actuator height is defined as a negative height position if it is retracted from zero height and a positive height position if it is extended from zero height. It may be that the controller is configured to limit extension of the actuator, defined as a positive height limit from zero height, and retraction of the actuator, defined as a negative height limit from zero height, to control the height of the chassis. The absolute value of the positive height limit and the negative height limit may be equal.

It may be that the mobile autonomous agricultural system further comprises an attitude sensor configured to output an attitude signal relating to the attitude of the powered mobile unit with respect to the horizontal. It may be that the controller is configured to receive the attitude signal and to control the extension of the actuator based on the attitude signal and distance signals to control an attitude of the chassis with respect to the horizontal and control the height of the chassis.

The controller may be configured to control the extension of the actuator based simultaneously on the attitude signal and that distance signal.

It may be that the controller is configured to determine a pitch offset and/or a roll offset relative to a horizontal plane based on the attitude signals, and to control the attitude of the chassis based on the pitch offset and/or the roll offset.

It may be that the controller is configured to:
determine a nominal height of the actuators based on the current height plus an incremental change of height based on the distance signal, and wherein, for each actuator individually, the controller is configured to:
determine a respective roll offset and/or a respective pitch offset,
determine a nominal position for each actuator based on the nominal height, the respective pitch offset and/or the respective roll offset, and
control the respective actuator to the nominal position.

It may be that the controller is configured to determine whether the respective nominal position for each actuator is outside the travel limit of the actuator and to adjust the nominal height of the actuators to limit the nominal position to a travel limit of the actuator. It may be that the respective roll offset and/or the pitch offset for each actuator is compared to an angle step limit, wherein if the roll offset and/or the pitch offset is above the angle step limit, the respective roll offset and/or pitch offset is modified to the angle step limit.

It may be that the actuators each comprise a travel defined by the change in length between the fully extended position and the fully retracted position, wherein the control of the actuators to control the attitude of the chassis with respect to the horizontal is limited to opposing ends of the travel, around the central portion of the travel. The ends of the travel and the central portion of the travel may not be overlapping. Designating predefined sections of the travel of the actuators to attitude control and height control enables each of the attitude and height to be controlled simultaneously without encroaching on the control of other.

It may be that controlling the extension of the actuators comprises controlling the actuators to incrementally extend or retract by a predefined second length to control the attitude of the chassis, and repeating receiving the attitude signals and controlling the extension in an attitude feedback loop to control the attitude of the chassis. The height feedback loop and the attitude feedback loop may operate simultaneously. The height feedback loop and the attitude feedback loop may operate concurrently.

It may be that the controller is calibrated to zero attitude when each of the actuators is between the fully extended position and the fully retracted position, and wherein the controller is configured to limit extension of the actuator, defined as a positive attitude limit from zero attitude, and retraction of the actuator, defined as a negative attitude limit from zero attitude, to control the attitude of the chassis. The absolute value of the positive attitude limit and the negative attitude limit may not be equal.

Calibrating the actuators to zero attitude, and incrementally extending or retracting the actuators up to a positive attitude limit and a negative attitude limit enables the attitude of the chassis to be independently controlled from the height of the chassis, whilst limiting encroachment of attitude control into the ability of the mobile autonomous agricultural system to control its height.

Calibrating the actuators to zero height, and incrementally extending or retracting the actuators up to a positive height limit and a negative height limit enables the height of the chassis to be independently controlled from the attitude of the chassis, whilst limiting encroachment of height control into the ability of the mobile autonomous agricultural system to control its attitude.

It may be that the mobile autonomous agricultural system comprises at least two distance sensors. It may be that the at least two distance sensors are disposed on opposing sides of a centreline of the chassis, parallel to the longitudinal axis, and have at least partially overlapping detection envelopes.

It may be that the mobile autonomous agricultural system comprises at least two pairs of distance sensors, including a pair of front distance sensors at a front end of the chassis, and a pair of back distance sensors at a back end of the chassis, wherein the front end of the chassis and the back end of the chassis are at opposing ends along the longitudinal axis of the chassis. Having distance sensors at the front and back end of the chassis means that they can simultaneously be used for collision avoidance and detection of an end of a row to help with autonomous navigation. Moreover, having them at the ends of the chassis means that changes can be detected earlier.

It may be that the inner zone of the chassis defines a tunnel extending along the longitudinal axis, and wherein extension and retraction of the actuator is configured to respectively raise or lower the height of the tunnel above the ground.

It may be that there are a plurality of distance sensors disposed on the powered mobile unit to face away from the inner section of the chassis, to sense external objects outside of the inner section of the chassis.

According to a second aspect, there is provided a method of controlling a mobile autonomous agricultural system according to the first aspect, the method comprising: receiving at least one distance signal relating to the distance of objects from respective distance sensors; and controlling extension of each of the actuators to control the height of the powered mobile unit based on the distance signals.

It may be that the method comprises: receiving at least two distance signals and determining an average distance signal based on the received distance signals. It may be that the method comprises controlling extension of each of the actuators to control the height of the powered mobile unit based on the average distance signal.

It may be that the average distance signal is calculated based only on the distance signals that are below an outlier threshold.

It may be that the method comprises controlling the actuators to extend when it is determined that the distance signals are below a first threshold, to raise the height of the chassis. It may be that the method comprises controlling the actuators to retract when it is determined that the distance signals are above a second threshold, to lower the height of the chassis.

It may be that the method comprises: calibrating the controller to zero height when the actuator is between the fully extended position and the fully retracted position, and wherein, before controlling the actuators to extend or retract to control the height of the chassis, determine whether such control is within a positive height limit or a negative height limit from zero height. It may be that if it is determined that the control is within the positive height limit or the negative height limit from zero height, controlling the actuator to extend or retract, and if it is determined that the control is not within the positive height limit or the negative height limit from zero height, controlling the actuator to maintain position to limit the extension or retraction up to the positive height limit and down to the negative height limit for controlling the height of the chassis.

It may be that controlling the extension of the actuators comprises controlling the actuators to incrementally extend or retract by a predefined first length to adjust the height of the chassis, and repeating receiving the distance signals and controlling the extension in a height feedback loop to control the height of the chassis.

It may be that the method comprises: receiving an attitude signal from an attitude sensor relating to the attitude of the powered mobile unit with respect to the horizontal; and controlling the extension of the actuator based on the attitude signal and distance signals to control an attitude of the chassis with respect to the horizontal and control the height of the chassis.

It may be that the method comprises determining a pitch offset and/or determining a roll offset relative to a horizontal plane based on the attitude signals. It may be that the method comprises controlling the attitude of the chassis based on the pitch offset and/or the roll offset

It may be that the method comprises:
determining a nominal height of the actuators based on the current height plus an incremental change of height based on the distance signal, and wherein, for each actuator individually, the method comprises:
determining a respective roll offset and/or a respective pitch offset,
determining a nominal position for each actuator based on the nominal height, the respective pitch offset and/or the respective roll offset, and
controlling the respective actuator to the nominal position.

It may be that the method comprises determining whether the respective nominal position for each actuator is outside the travel limit of the actuator and to adjust the nominal height of the actuators to limit the nominal position to a travel limit of the actuator

It may be that the method comprises comparing the respective roll offset and/or the pitch offset for each actuator to an angle step limit, wherein if the roll offset and/or the pitch offset is above the angle step limit, modifying the respective roll offset and/or pitch offset to the angle step limit.

It may be that the method comprises: calibrating the controller to zero attitude when each of the plurality of actuators are between the fully extended position and the fully retracted position, and wherein, before controlling the actuators to extend or retract to control the attitude of the chassis, determine whether such control is within a positive attitude limit or a negative attitude limit from zero attitude. It may be that if it is determined that the control is within the positive attitude limit or the negative attitude limit from zero attitude, controlling the actuator to extend or retract, and if it is determined that the control is not within the positive attitude limit or the negative attitude limit from zero attitude, controlling the actuator to maintain position to limit the extension or retraction up to the positive attitude limit and down to the negative attitude limit for controlling the attitude of the chassis.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described, by way of example only, with reference to the accompanying Figures, in which:
**Figure 1** schematically shows an oblique view of an example autonomous mobile agricultural system;
**Figure 2** schematically shows a front view of the example autonomous mobile agricultural system traversing along a row of crops;
**Figures 3a and 3b** schematically show a side view of a wheel unit of the mobile autonomous agricultural system of Figures 1 and 2 in a retracted configuration and an extended configuration respectively;
**Figure 4** is a flow chart showing steps of a method of controlling the height of the autonomous mobile agricultural system; and
**Figure 5** is a flow chart showing further steps of a method of controlling the attitude of the autonomous mobile agricultural system.

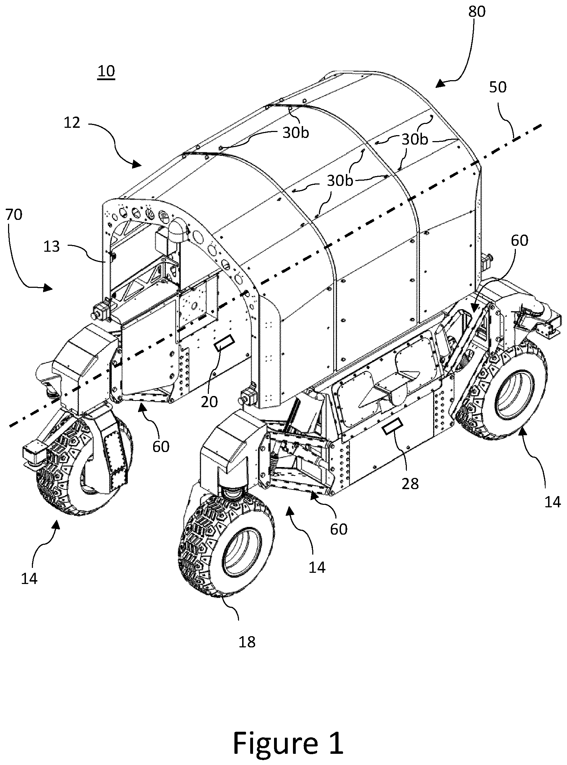

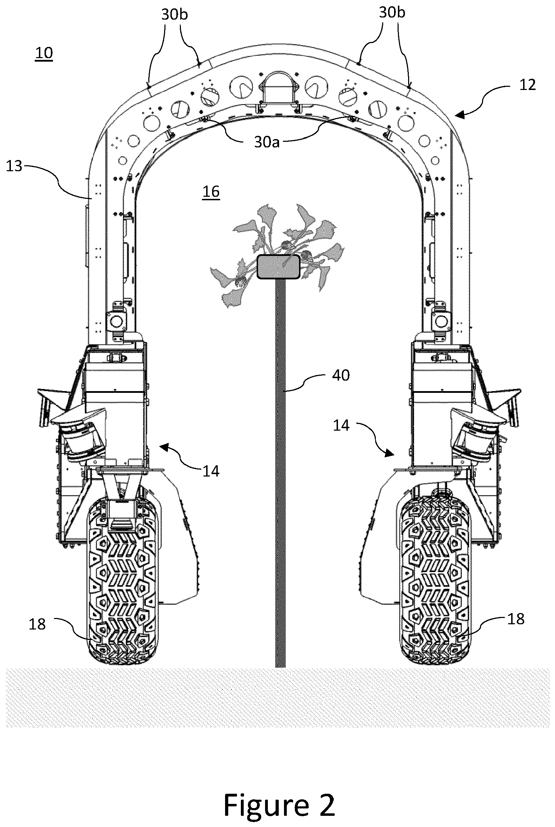

**Figures 1** **and** **2** show an example mobile autonomous agricultural system 10 comprising a powered mobile unit 12 configured for carrying agricultural equipment. The mobile autonomous agricultural system 10 is configured to operate along rows 40 of crops (best shown in Figure 2, with each row 40 shown extending into the page) to perform agricultural tasks, such as harvesting, husbandry, or monitoring the crops. The rows 40 of crops may be disposed on top of posts to elevate them from the ground, which is common, for example, in strawberry farming, and each row 40 may have any length, which may vary from the lengths of other rows 40 on the same site.

The mobile unit 12 extends from a front end 70 to a back end 80 along a longitudinal axis 50. In this example, the mobile unit 12 comprises a chassis 13 having an arch profile extending along the longitudinal axis 50. In other words, at any point along the longitudinal axis 50, a cross section of the mobile unit 12 comprises an arch profile. The mobile unit 12 is therefore configured to move along rows of posts 40 which are aligned with the longitudinal axis 50.

The arch profile of the mobile unit 12 defines an inner zone 16, which in this example is in the form of a tunnel extending along the longitudinal axis 50. Agricultural equipment 22 may be disposed in the inner zone 16 such that it is protected from damage, and the row 40 of posts is received within the inner zone 16 as the mobile unit 12 moves along the row 40. The agricultural equipment 22 in this example comprises robot arms. In other examples, it may include UV tubes or any other suitable equipment for carrying out agricultural tasks. The arch profile further allows the mobile unit 12 to traverse along rows 40 of crops, which in this example are shown as being raised above the ground on posts (for ease of accessibility), with a single row 40 of crops extending through the inner zone 16 along the longitudinal axis 50. The row 40 is then simultaneously accessible by the agricultural equipment from two sides, and the mobile unit 12 can move along the row 40 without impacting it.

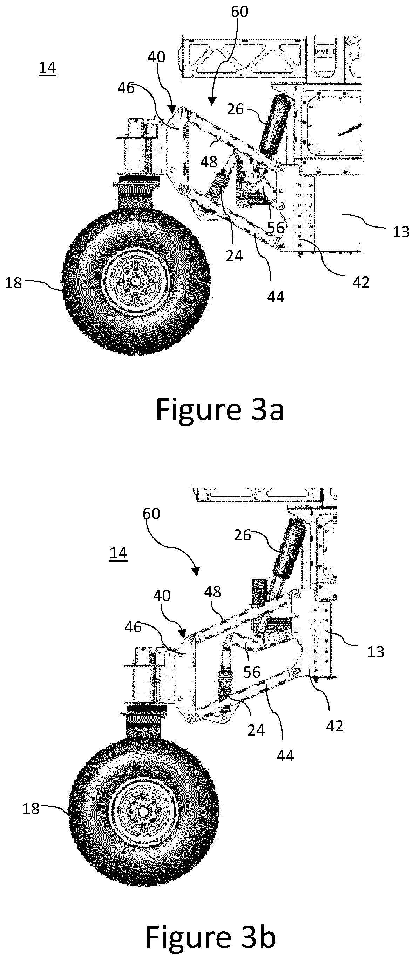

In this example, distal ends of arms of the arch are fixed to powered wheel units 14, each wheel unit 14 comprises a wheel 18 (pivotable with respect to the mobile unit 12 for steering) and a suspension assembly 60 which is described in more detail with reference to Figures 3a and 3b. In this example, the wheels 18 of each wheel unit 14 are driven by electrical motors which each have an independently variable speed. Each wheel 18 is also independently pivotable for steering.

The arms of the arch extend away from the wheel units 14 to an apex of the arch. In this example, each distal end of the arch is attached to two wheel units 14, such that the whole arch is supported on the ground by a total of four wheel units 14. It will be appreciated that in other examples, any suitable number of wheel units may be used, or any other suitable device for propelling the mobile unit 12 may be used.

Although it has been described that the profile of the mobile unit defines an arch with distal ends of the arch fixed to wheels, in other examples, the mobile unit may have any suitable profile, or the arch profile may be inverted so that a portion of the arch at the apex is fixed to wheels and the distal ends extend upwards, away from the wheels and the ground, defining an inner zone between the distal ends. This can be used in situations where the crops are suspended from above, such that an inner zone between arms of the arch receives the suspended crop, and the crop may also accessible to agricultural equipment in the arch from two sides simultaneously. For these examples, and the specific example described above, the longitudinal axis may correspond to the axis of the mobile unit which is configured to be parallel to a row while the controller controls the mobile unit to move along the row.

**Figures 3a and 3b** show an example wheel unit 14 in more detail. Figure 3a shows the wheel unit 14 in a retracted configuration, and Figure 3b shows the wheel unit 14 in an extended configuration. The suspension assembly 60 comprises a passive suspension unit 24 and an active linear actuator 26. In this example, the suspension unit 24 includes a passive spring disposed around a shock absorber and is coupled to the wheel 18 to dampen shocks and enable some movement of the wheel 18 relative to the chassis 13 to stabilise the mobile unit 12 on uneven ground. In this example, the linear actuator 26 is coupled between the suspension unit 24 and the chassis 13 such that it is configured to move the suspension unit 24 relative to the chassis 13 to thereby move the wheel 18 relative to the chassis 13. Moving the wheel 18 relative to the chassis 13 enables the height of the mobile unit 12 above the ground to be changed. Controlling the height of the mobile unit 12 refers to changing the overall height of the chassis 13 above the ground to avoid obstacles. This may include avoiding obstacles within the inner zone 16, or avoiding external objects outside the inner zone 16 of the chassis 13.

In this example, a lever 56 is pivotably connected, at a proximal end of the lever 56, to a wheel base 42 on the chassis 13, and is pivotably connected, at a distal end of the lever 56, to the suspension unit 24. The linear actuator 26 is pivotably connected at one end to the lever 56 at a point between the proximal end and the distal end of the lever 56, and pivotably connected to the wheel base 42 at an opposing end of the actuator 26. This arrangement results in the suspension unit 24 moving more than an end of the linear actuator 26 when the linear actuator 26 extends or retracts. Therefore, the linear actuator 26 in this example is indirectly connected to the suspension unit 24 and to the wheel 18. In other words, the linear actuator is disposed between the wheel base 42 and the wheel 18. It will be appreciated that, in other examples, the linear actuator may be connected directly to the suspension unit or disposed in any suitable location to enable it to modify the height of the mobile unit 12 by extending or retracting.

The linear actuator 26 in this example acts independently of the suspension unit 24. The linear actuator 26 comprises a travel defined by the change in length between a fully extended position at which the linear actuator 26 has an extended length, and a fully retracted position at which the linear actuator 26 has a retracted length smaller than the extended length. The linear actuator 26 being in the retracted position corresponds to the wheel unit 14 being in the retracted configuration, and the linear actuator 26 being in an extended position corresponds to the wheel unit 14 being in the extended configuration. For example, the linear actuator 26 may have a total travel of 130mm.

Extending the linear actuator 26 in this example increases the height of the mobile unit 12 above the ground, and thereby increases the height of the tunnel, and retracting the linear actuator 26 in this example decreases the height of the mobile unit 12 above the ground, and thereby decreases the height of the tunnel. Therefore, controlling the extension (i.e., the amount of extension) of the actuator 26 controls the height of the chassis 13 (and thereby the mobile unit 12) above the ground. In this example, if all four actuators are extended an equal amount, the height of the chassis 13 is uniformly increased, and if all four actuators are retracted an equal amount, the height of the chassis 13 is uniformly decreased. It will be appreciated that extending or retracting any of the actuators a different amount to the other actuators will change the attitude of the chassis 13 (and thereby the mobile unit 12) with respect to the horizontal (or the ground).

In this example, the suspension assembly further comprises a four-bar linkage 40. The four-bar linkage 40 comprises a wheel base 42 which is fixed to the chassis 13, an input link 44, a coupler link 46 and a follower link 48. In this example, the input link 44 is pivotably connected between the coupler link 46 and the wheel base 42 such that the coupler link 46 opposes the wheel base 42, and the follower link 48 is pivotably connected between the coupler link 46 and the wheel base 42 on an opposing side of the coupler link 46 and wheel base 42 to the input link 44.

In this example, the wheel 18 is fixed to the coupler link 46. At one end, the suspension unit 24 is pivotably coupled to the input link 44, and at an opposing end the suspension unit 24 is pivotably coupled to the linear actuator 26. The linear actuator 26 in this example is coupled to the wheel base 42 (i.e., the chassis 13) and to the suspension unit 24. Therefore, the linear actuator 26 and the suspension unit 24 are arranged in series in this example between the wheel base 42 (or the chassis 13) and the input link 44. In other words, the linear actuator 26 in this example is indirectly coupled to the input link 44 via the suspension unit 24 and the lever 56. Therefore, retraction of the linear actuator 26 moves the coupler link 46 towards the chassis 13 (as shown in Figure 3a), by means of rotation of the four-bar linkage 40 by rotation of the input link 44, and extension of the linear actuator 26 moves the coupler link 46 away from the chassis 13 (as shown in Figure 3b).

It will be appreciated that the mobile unit 12 may not comprise a suspension unit. In some examples, the mobile unit 12 may simply comprise an actuator, which may be a linear actuator or any suitable type of actuator, which is moveable between a fully extended position and a fully retracted position to respectively raise or lower the height of the chassis 13 above the ground.

Referring back to Figures 1 and 2, the mobile autonomous agricultural system 10 comprises a plurality of distance sensors 30 (30a and 30b) disposed on the mobile unit 12, configured to output respective distance signals relating to the distance of objects from the respective distance sensor. In this example, the distance sensors 30 are two-dimensional Light Detection and Ranging (LIDAR) sensors.

In this example, the distance sensors 30 include two internal distance sensors 30a disposed on a front end 70 (front distance sensors) of the mobile unit 12 (best seen in Figure 2), and two internal distance sensors 30a disposed on the back end 80 of the mobile unit 12 (back distance sensors) (not shown), so that the front distance sensors and the back distance sensors are on opposing ends of the chassis 13 along the longitudinal axis 50. The distance sensors 30 are oriented to face the inner zone 16 to sense internal objects within the inner zone 16 at the front end 70 of the mobile unit 12 and the back end 80 of the mobile unit 12 respectively. In particular, in this example, the distance sensors 30 are configured to detect plants, such as a crop canopy on the rows 40 of posts, or infrastructure within the inner zone 16. Having distance sensors 30 at the front 70 and back end 80 of the chassis 13 means that they can simultaneously be used for collision avoidance and detection of an end of a row to help with autonomous navigation. Moreover, having them at the ends of the chassis (particularly at the front end 70) means that changes can be detected earlier as the mobile unit 12 is moving.

In this example, the two back distance sensors 30a and the two front distance sensors 30a are disposed on opposing sides of a centreline of the chassis 13, where the centreline is parallel to the longitudinal axis 50. The two back distance sensors and the two front distance sensors in this example also have at least partially overlapping envelopes. This improves the likelihood that they will detect internal obstacles. In other examples, they may be disposed at any suitable location on the mobile unit 12, including in the middle of the chassis 13. In some examples, there may be only a single distance sensor which may be located in any suitable location. Having more internal distance sensors reduces the risk of missing potential internal obstacles, particularly a crop canopy which is unlikely to be uniform.

In this example, the distance sensors 30 also comprise a plurality of external distance sensors 30b which are disposed on an outer surface of the chassis 13, facing away from the inner zone 16, and which are configured to sense external objects outside the inner zone 16 of the chassis, such as doors to polytunnels or other overhead obstacles. In this example, the external distance sensors 30b are distributed across the apex of the chassis 13 to detect external objects, particularly objects overhead. In other examples, the external distance sensors 30b may be disposed in any suitable location on the mobile unit 12 to detect potential external objects which the mobile unit 12 may need to avoid colliding with.

In some examples, there may be only internal distance sensors 30a, or only external distance sensors 30b on the chassis 13. In some examples, there may be only single distance sensor which may be an internal distance sensor or an external distance sensor, or in other examples there may be only one of each internal and external distance sensors.

In this example, the mobile unit 12 further comprises an attitude sensor 28 which is configured to output an attitude signal relating to the attitude of the powered mobile unit with respect to the horizontal.

The mobile autonomous agricultural system 10 further comprises a controller 20 which in this example is configured to receive distances signals from the distance sensors 30 and to control extension (i.e., whether to extend or retract) of each of the actuators 26 of each wheel unit 14 to control the height of the mobile unit 12 based on the distance signals. In this example, the controller 20 is also configured to receive attitude signals from the attitude sensor 28 and to control extension of each of the actuators 26 based on the attitude signal. Therefore, in this example, the controller 20 is configured to control the extension of each of the actuators 26 based simultaneously on the attitude signal and that distance signal.

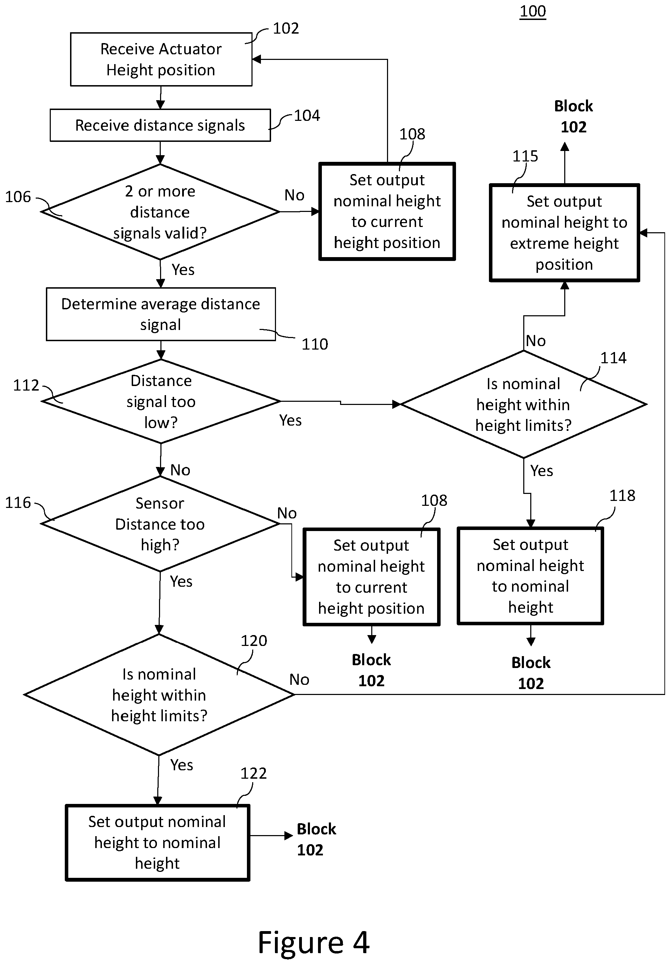

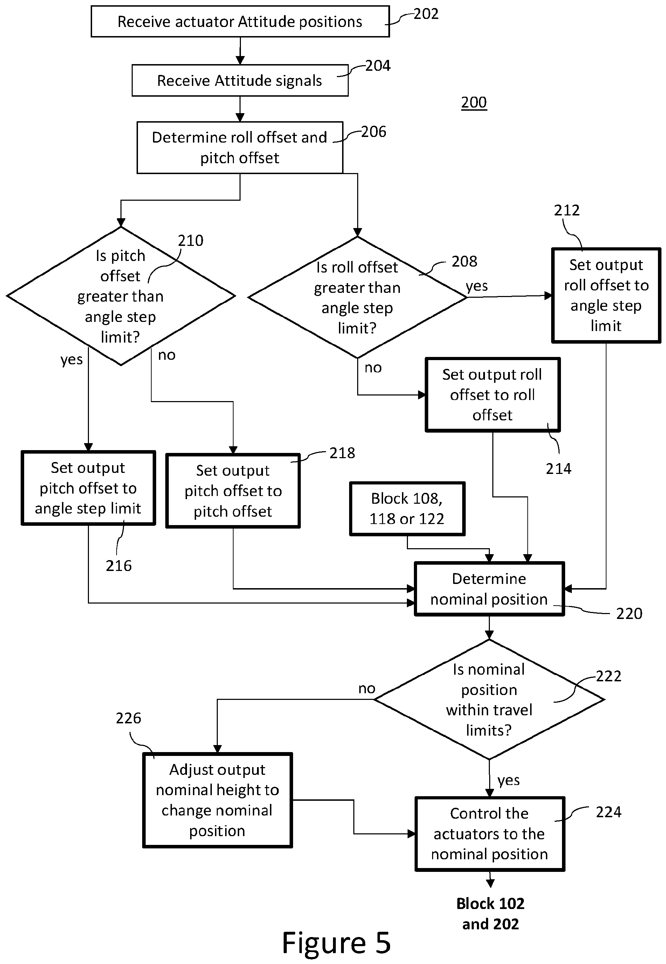

Controlling the height of the chassis 13 based on signals from distance sensors enables the mobile autonomous system 10 to avoid collision with internal objects, such as plants or infrastructure within the inner zone 16 of the chassis 13 when it is travelling over a row, or external objects, outside the inner zone 16 of the chassis 13, such as rolling doors or other overhead obstacles. Controlling the height of the chassis 13 also enables the chassis 13 to be kept at an optimum distance from the plants, for example if cameras or UV-C lights are disposed on the chassis 13, they may have a maximum useful distance from the plants. Example methods of controlling the height and attitude of the mobile unit 12 based on signals from the distance sensors 30 and attitude sensor is set out in more detail with reference to Figures 4 and 5 below.

In this example, the controller 20 is also configured to control the direction of travel of the mobile unit 12 by controlling the wheel units 14. In this example, in an autonomous mode, the controller 20 is configured to autonomously move the mobile unit 12 along the rows 40 of crops, and between the rows 40, where the rows may comprise a straight line of crops, or any other line of crops with a non-linear profile. In other words, the controller 20 is configured to align the longitudinal axis 50 of the inner zone 16 of the mobile unit 12 with a first row 40 of crops such that the arch profile is centred and aligned with the row 40 of crops, and to move the mobile unit 12 to follow the row.

In this example, the mobile autonomous agricultural system 10 may also be operated in a manual mode, in which a user can manually control the movement of the mobile unit 12, for example up to a first row 40, at which point the user may activate the autonomous mode.

In this example, the autonomous mode of the mobile autonomous agricultural system 10 provides for autonomous movement between adjacent rows 40 of crops in a single polytunnel having multiple rows 40 of crops, and also from one polytunnel to another, which may include traversing through doors and under other overhead obstacles to reach other polytunnels or rows 40. In such conditions, the mobile unit 12 will be required to autonomously move over crop canopies or other internal obstacles within the inner zone 16, and under overhead obstacles or other external obstacles, requiring the height of the chassis 13 to be controlled in order to avoid the internal and external obstacles. Simultaneously, where the mobile unit 12 is moving over uneven ground, the attitude of the mobile unit 12 with respect to the horizontal must also be maintained in order to avoid overbalancing of the mobile unit 12, and to minimize disturbances from the signals from the distance sensors 30, which are assumed to be at a certain angle with respect to the horizontal.

It will be appreciated that, in other examples, the controller 20 may be configured to control the mobile unit 12 in any suitable manner to enable use of the mobile unit 12 for a particular application. The specific control of the system 10 in this example to control the height and/or the attitude of the mobile unit 12 is described in more detail with reference to Figures 4-5.

**Figure 4** is a flow chart showing steps of a method 100 of controlling the height of the mobile unit 12, which method 100 enables the attitude of the mobile unit 12 to be simultaneously controlled with the same actuators 26 (described with reference to Figure 5). In this example, reference is made to the signals received from the internal distance sensors 30a. However, it will be appreciated that the method may also use signals from the external distance sensors 30b in a similar manner.

Block 102 comprises receiving an actuator height position from the plurality of actuators 26. In this example, the actuator 26 is calibrated to zero height when the actuator 26 is at a point between the fully extended position and the fully retracted position, such as a midpoint. Extension of the actuator 26 may be defined as a positive height change, and retraction of the actuator 26 may be defined as a negative height change. A positive height position (i.e., when the actuator is extended from zero height) may be defined as an absolute positive height value (e.g., +60mm), as a percentage of the total travel (e.g., +30% of the total travel), or as a percentage of a total available positive travel (e.g., +100%, which would be the fully extended position). A negative height position (i.e., when the actuator is extended from zero height) may be defined as an absolute negative height value (e.g., -60mm), as a percentage of the total travel (e.g., -30% of the total travel), or as a percentage of the total available negative travel (e.g., -100%, which would be the fully retracted position). Receiving a height position in this manner enables actuator height changes to change the height of the chassis 13 to be limited to a portion of the total travel, in order to allow the same actuators 26 to perform actuator height changes for other purposes, such as for attitude control of the chassis 13 as set out below, with reference to Figure 5.

In other examples, the actuator height position may be an absolute distance from a fully retracted position, or may be in the form of a percentage of extension up to the fully extended position. For example, the actuators may be in the fully retracted position, which may be considered to be 0% height, or the actuators may be in the fully extended position, which may be considered to be 100% height. Receiving the actuator height position in this manner enables the controller 20 to prevent attempts to retract the actuators 26 beyond the fully retracted position or to extend the actuators 26 beyond the fully extended position.

Block 104 comprises receiving distance signals from the internal distance sensors 30a, which can be used to determine whether the height of the chassis 13 must be modified to avoid collision with internal objects, or in the case that external distance sensors are additionally or alternatively used in the method, whether the height of the chassis 13 must be modified to avoid collision with external objects.

In block 106, it is determined whether two or more of the received distance signals are valid. For example, the internal distance sensors 30a are looking for a crop canopy within the inner zone 16, and therefore, if distances detected by the distance sensors are beyond an outlier threshold, such as 900mm, it may indicate that the distance sensor is not capturing the actual crop canopy. This is possible because the crop canopy will have a plurality of leaves which may not be uniform and may be difficult to detect. Alternatively, as the mobile unit 12 moves along a row 40, when approaching the end of the row 40, the front distance sensors will no longer detect the crop canopy, while the back distances sensors would. Therefore, distance signals which are at or above an outlier threshold may be considered invalid and may be discarded. This block may be omitted from the method, for example in cases where the objects which are expected to be detected are uniform and unlikely to change or end. Therefore, by determining whether distance signals are valid, it avoids using erroneous signals, or signals which indicate that the chassis has reached the end of a row to control the height of the chassis 13.

If two or more distance signals are not determined to be valid (i.e., if only 1 distance signal is determined to be valid), the method 100 may proceed to block 108. If two or more distance signals are determined to be valid, the method may proceed to block 110. In other examples, block 106 may proceed to block 110 if one or more distance signals are determined to be valid, and may therefore proceed to block 108 only if no distance signals are determined to be valid.

In block 108, the method 100 may set an output nominal height position to a current height position as received in block 102. In other words, this ensure that the actuators 26 are not moved to change the height of the chassis 13. After block 108, the method 100 may return to block 102 to repeat, to form a height feedback loop for controlling the height of the chassis 13.

In block 110, the method 100 may comprise determining an average distance signal from the valid distance signals. For example, the average distance signal may be a mean of the distance signals, such as all the valid distance signals. If block 106 is omitted, then the average distance signal may be an average of all of the distance signals. Plants are notoriously non-uniform, so using an average distance signal will enable more accurate identification of potential obstacles in the inner zone of the chassis. In some examples, the average distance signals may be only those distance signals from the front distance sensors (which may be all of the front distance sensors, or only the valid front distance sensors). For example, the front distance sensors represent the distance of objects in the inner zone 16 at the front of the chassis 13, but as the chassis 13 moves, those objects detected at the front will move towards the back of the mobile unit 12. In some examples, the average distance signals may be only those distance signals from the back distance sensors (which may be all of the back distance sensors, or only the valid back distance sensors). In some examples, multiple averages may be determined, such as an average for the front distance signals (all or just the valid signals), an average for the back distance signals (all or just the valid signals) and an average for all of the distance signals (all or just the valid signals), and the difference averages may be used for different controls.

In some examples, block 110 may be omitted or block 110 may comprise selecting a most appropriate distance signal from the valid distance signals (or all the distance signals if block 106 is omitted). For example, block 110 may comprise selecting the smallest distance signal.

In block 112, the method 100 may comprise determining if the average distance signal indicates a distance which is too low. This may comprise comparing the average distance signal to a first threshold, and if it is below the first threshold, determining that the sensor distance is too low. In some examples, the average distance signal from just the front distance sensors may be used in block 112. In other examples, the average distance signal from just the back distance sensors may be used in block 112. In yet further examples, the average distance signal from the front distance sensors may be compared to the first threshold and the average distance signal from the back distance sensors may be compared to the first threshold, and it may be determined that the average distance signal indicates a distance which is too low if either the average distance signal from the front distance sensors or from the back distance sensors is below the first threshold, thereby using an OR logic. When the distance signals are determined to be too low, the chassis 13 should be raised by extending the actuators to reduce the risk of collisions with the crop canopy. By considering the front sensors separately from the back sensors, the movement of the chassis 13 away from the crop canopy can be quicker, with less processing power, since only one pair of sensors (i.e., the signals from only two sensors) is needed to register a change. In other examples, the method may comprise using an AND logic with the average distance signals from the front sensors compared to the first threshold and the average distance signal from the back sensors compared to the first threshold.

In examples where block 110 is omitted, the distance signal being too low may be determined if each and every distance signal is below the first threshold, or if each of the distance signals from the front sensors are below the first threshold, or if at least one, or at least two or more distance signals are below the first threshold.

If it is determined that the distance signal is too low, the method proceeds to block 114. If it is determined that the distance signal is not too low, the method proceeds to block 116.

In block 114, the method 100 may comprise determining if a nominal height, which is determined based on the current actuator height position plus an extension of the actuator 26, is within height limits. For example, the actuator 26 or the controller 20 may be configured to incrementally extend or retract the actuator 26 by a predefined first length to adjust the height of the chassis 13, and work in a height feedback loop to determine whether further incremental extension or retraction is required, for example by returning to block 102, to control the height of the chassis 13. The predefined first length may be 50mm, for example. With the suspension system of Figures 3a-3b, changes in actuator length of 50mm may result in larger changes of height for the chassis 13. In this example, a change of 50mm of actuator length may correspond to a change in height of the chassis of 150mm.

The control of extension or retraction to control the height of the chassis 13 may be limited to a central portion of the travel of the actuator 26. In other words, the control of extension of the actuators to control the height of the chassis 13 may be limited to a proportion of the travel which is less than 1. The proportion may be less than 0.9, 0.8, 0.7, 0.6, 0.5, or any suitable value. In this example, the total travel of the actuator 26 is 130mm and the control of the extension of the actuator 26 for changing the height of the chassis 13 may be limited to a central 80mm of the total travel which, in this example, translates to a total change in height of the chassis 13 of 200mm.

In practice, this limitation may be applied by calibrating the actuator 26 to zero height when the actuator 26 is at a point, such as a midpoint, between the fully extended position and the fully retracted position, and limiting extension of the actuator 26 to a positive height limit from zero height, such as +40mm of the total travel above zero height, and limiting retraction of the actuator 26 to a negative height limit from zero height, such as -40mm of the total travel below zero height, to control the height of the chassis 13. The absolute value of the positive height limit and the negative height limit may be equal. In other examples, they may not be equal.

If it is determined that the nominal height of the actuators 26 is within height limits, then the method proceeds to block 118. If it is determined that the nominal height of the actuators 26 is not within height limits (i.e., extending the actuator 26 by the incremental predefined first length would raise the actuator height to above the positive height limit), then the method may proceed to block 115.

In block 118, the method 100 comprises setting an output nominal height to the nominal height, so that the height of the chassis 13 would be raised if the actuators 26 were controlled to move to the output nominal height. This may comprise extending each and every actuator 26 by the predefined first length. Alternatively, it may comprise extending each and every actuator 26 by a length determined to bring the height upwards so that the distance signals would indicate a distance at or above the first threshold. After block 118, the method 100 may return to block 102 to repeat, where the actuator height position is now the predefined first length (e.g., 50mm) higher than it was in block 102 originally, to form the height feedback loop for controlling the height of the chassis 13. Since changes in height of the chassis 13 are achieved by changing the actuator height position equally for each and every actuator 26, the actuator height position should be the same for every actuator in block 102. In some examples, where attitude is simultaneously controlled, the method may also move to block 220 in Figure 5 from block 118 to run concurrently with block 102.

In other examples, block 114 may be omitted, and the method 100 may instead proceed directly to block 118 from block 112 when it is determined that the signal distance is too low.

In block 115, the output nominal height is set to the height limit (i.e., an extreme height position). For example, the nominal height may be too high so that it is above the positive height limit, and such that the output nominal height is set to the positive height limit.

In block 116, the method 100 may comprise determining if the average distance signal indicates a distance which is too high. This may comprise comparing the average distance signal to a second threshold, and if it is above the second threshold, determining that the sensor distance is too high. The first threshold may be smaller than the second threshold. In some examples, the average distance signals from all of the distance signals (or all of the valid distance signals) may be compared against the second threshold. When the distance signals are determined to be too high, the chassis 13 should be lowered by retracting the actuators, but this presents a risk of collisions with the crop canopy. By considering all of the sensors (rather than just two or three of the sensor signals), risk of collision with the crop canopy by movement of the chassis 13 towards the crop canopy can be reduced.

In some examples, the average distance signal from just the front distance sensors may be used in block 116. In other examples, the average distance signal from just the back distance sensors may be used in block 116. In yet further examples, the average distance signal from the front distance sensors may be compared to the second threshold and the average distance signal from the back distance sensors may be compared to the second threshold, and it may be determined that the average distance signal indicates a distance which is too high if either the average distance signal from the front distance sensors or from the back distance sensors is above the second threshold, thereby using an OR logic. In other examples, the method may comprise using an AND logic with the average distance signals from the front sensors compared to the second threshold and the average distance signal from the back sensors compared to the second threshold, and it may be determined that the average distance signal indicates a distance which is too high only if both the average distance signal from the front distance sensors or from the back distance sensors are above the second threshold.

In examples where block 110 is omitted, the distance signal being too high may be determined if each and every distance signal is above the second threshold, or if at least one, or at least two or more distance signals are above the second threshold.

If it is determined that the distance signal is too high the method proceeds to block 120. If it is determined that the distance signal is not too high, the method proceeds to block 108.

In block 120, the method 100 may comprise determining if the nominal height is within height limits in a similar manner to block 114.

If it is determined that the nominal height is within height limits, then the method proceeds to block 122. If it is determined that retraction of the actuator 26 is not within height limits (i.e., retracting the actuator 26 by the incremental predefined first length would cause the actuator height position to fall below the negative height limit), then the method may proceed to block 115.

In block 122, the method 100 comprises setting the output nominal height to the height limit (i.e., an extreme height position). For example, the nominal height may be too low so that it is below the negative height limit, and such that the output nominal height is set to the negative height limit, so that the height of the chassis 13 would be raised if the actuators 26 were controlled to move to the output nominal height. In this example, this comprises retracting each and every actuator 26 by the predefined first length. Alternatively, it may comprise retracting each and every actuator by a length determined to bring the height to or below the second threshold. After block 122, the method 100 may return to block 102 to repeat, now with a different actuator height position, to form the height feedback loop for controlling the height of the chassis 13. In some examples, where attitude is simultaneously controlled, the method may also move to block 220 in Figure 5 from block 122 to run concurrently with block 102.

**Figure 5** is a flow chart showing steps of a method 200 of controlling the attitude of the mobile unit 12, which enables simultaneous control of the height of the mobile unit 12.

In block 202, the method 200 comprises receiving an actuator attitude position from each of the plurality of actuators 26. In this example, the actuator 26 is calibrated to zero attitude when each of the actuators 26 is at a position between the fully extended position and the fully retracted position, for example, when the mobile unit 12 is on a horizontal surface, and when the actuators 26 are all at a point (for example the same point as zero height) between the fully extended position and the fully retracted position. To calibrate the actuators 26 for zero attitude, they would all be at the same position between the fully extended and the fully retracted position. Extending the actuator 26 to maintain the attitude may be defined as a positive attitude movement and retracting the actuator 26 to maintain the attitude may be defined as negative attitude movement. Positive attitude movement may be defined as an absolute change in actuator length (e.g., +20mm), or as a percentage of the total actuator travel (e.g., +30%). Negative attitude movement may be defined as an absolute change in actuator length (e.g., -20mm) or as a percentage of the total travel (e.g., -30%).

The controller 20 in this example is configured to notionally limit control of the actuators 26 to control the attitude to opposing ends of the travel around the central portion of the travel. For example, the controller 20 may define a positive attitude limit, for example of 30mm, from zero attitude and a negative attitude limit, for example of -20mm, from zero attitude to control the attitude of the chassis 13. The actuator attitude position may therefore be defined as a positive or negative percentage (between -100% to zero attitude, and zero attitude to +100%) of the total available travel for correcting attitude. The total available positive travel up to the positive attitude limit from zero attitude may not be equal to the total available travel from the negative attitude limit up to zero attitude. In some examples, they may be equal.

The ends of the travel and the central portion of the travel may not be overlapping. Designating predefined sections of the travel of the actuators 26 to attitude control and height control respectively enables each of the attitude and height to be controlled simultaneously without encroaching on the control of other. In other words, limiting the movement of the actuators 26 to correct attitude and limiting movement of the actuators 26 to correct height enables the controller 20 to control both the height of the chassis 13 and the attitude of the chassis 13 simultaneously, whilst ensuring that correction of one of the height or attitude does not encroach on the ability the correct the other of the height and attitude.

In block 204, the method 200 comprises receiving attitude signals from the attitude sensor.

In block 206, the method 200 comprises determining a roll offset and a pitch offset relative to a target plane or attitude, which may be a horizontal plane. In other words, the roll offset and the pitch offset may be in the form of an angle offset from the horizontal plane or in the form of an amount that the actuator 16 would have to retract or extend to correct the offset. In some examples, block 206 may only determine a pitch offset, or may only determine a roll offset. If the chassis 13 is horizontal, the roll offset and the pitch offset would be zero. The roll offset may be defined as a positive angle or extension amount in one direction from the horizontal and a negative angle or extension amount in the other direction from the horizontal. The pitch offset may be defined as a positive angle or extension amount in one direction from the horizontal and a negative angle or extension amount in the other direction from the horizontal. From block 206, the method may simultaneously move to block 208 and 210.

In block 208, the method 200 comprises determining if the roll offset is greater than an angle step limit. For example, the angle step limit may be a limit in the angle change in a single step, such as 5 degrees. If the offset in roll from the horizontal plane is larger than the angle step limit, then the method may proceed to block 212. If the roll offset is determined not to be greater than the angle step limit, the method may proceed to block 214.

In block 212, the method 200 may comprise setting an output roll offset to the angle step limit. In block 214, the method 200 may comprise setting the output roll offset to the roll offset. In some examples, if the roll offset is below a minimum threshold such as 0.25 degrees, the output roll offset may be set to zero. From blocks 212 and 214, the method 200 may proceed to block 220.

In block 210, the method 200 comprises determining if the pitch offset is greater than the angle step limit. The angle step limit for pitch may be the same as the angle step limit for roll, or may be different. If the offset in pitch from the horizontal plane is larger than the angle step limit, then the method may proceed to block 216. If the offset in roll from the horizontal plane is larger than the angle step limit, then the method may proceed to block 216. If the roll offset is determined not to be greater than the angle step limit, the method may proceed to block 218.

In block 216, the method 200 may comprise setting an output pitch offset to the angle step limit. In block 218, the method 200 may comprise setting the output pitch offset to the pitch offset. From blocks 216 and 218, the method 200 may proceed to block 220.

In block 220, the method 200 may comprise receiving the output pitch offset from block 216 or block 218, the output roll offset from block 212 or block 214 and the output nominal height from block 108, 118 or 122 from Figure 4. In block 220, the method may comprise determining a nominal position for each of the actuators 26 from the output pitch offset, the output roll offset and the output nominal height for each of the respective actuators 26.

Determining the nominal position for each of the four actuators 26 on the chassis 13, for example, may comprise performing a different calculation for each actuator. For example, an equation for determining nominal height for the front left actuator may be Nominal Position Front Left Actuator = Nominal Height + Roll Offset - Pitch Offset. An equation for determining nominal height for the front right actuator may be Nominal Position Front Right Actuator = Nominal Height - Roll Offset - Pitch Offset. An equation for determining nominal height for the back left actuator may be Nominal Position Back Left Actuator = Nominal Height + Roll Offset + Pitch Offset. An equation for determining nominal height for the back right actuator may be Nominal Position Back Right Actuator = Nominal Height - Roll Offset + Pitch Offset.

In this example, the method 200 comprises block 222 in which it is determined if the nominal position is within travel limits for each of the actuators 26. For example, each actuator has a maximum position and a minimum position based on the physical travel limits of the respective actuator 26, and the nominal position may require the actuator 26 to move outside its physical limits. If it is determined that the nominal position for the actuator 26 is within travel limits, the method 200 may proceed to block 224 in which the actuators 26 are controlled to move to their respective nominal position, and the method may then proceed to blocks 102 and 202 to generate a feedback loop where the height and attitude are simultaneously controlled.

If it is determined that the nominal position is not within travel limits, the method 200 may proceed to block 226 in which the output nominal height is adjusted by any amount necessary to change the nominal position so that it is within the travel limits. In this manner, the method 200 ensures that the attitude of the chassis 13 remains as close to the horizontal as possible, and it is the height of the chassis that is changed to compromise when the actuators 26 cannot accommodate the required movement for both height and attitude correction. From block 226, the method 200 may proceed to block 224.

In other examples, the method 200 may omit blocks 222 and 226, where the method 200 may comprise controlling each of the actuators 26 to move to their respective nominal position directly from block 220. In examples, where the attitude is not considered, the method 100 may comprise controlling each of the actuators 26 based on the nominal height from blocks 112 and 116 or the output nominal height from blocks 108, 118 or 122.

In some examples, rather than performing the method 200 in Figure 5, the method may comprise determining whether it is possible to control each of the actuators 26 to extend or retract to get the attitude towards horizontal within the positive attitude limit and the negative attitude limit for each respective actuator 26. In such an example, controlling the extension of the actuators 26 to maintain the horizontal attitude would comprise controlling the actuators 26 to incrementally extend or retract by a predefined second length, for example 50mm, to control the attitude of the chassis 13, in order to incrementally correct the attitude of the chassis 13. In other examples, controlling extension of the actuators 26 may comprise controlling them to move so that the attitude of the chassis 13 is immediately corrected. With the suspension unit of Figures 3a-3b, controlling any actuator 26 to extend or retract by any length, such as 5mm, may result in a larger change in height of the respective wheel base 42 from the ground, such as 15mm, thereby having a larger impact on attitude correction.

If it is determined that extending or retracting any of the actuators to correct attitude is not within a respective attitude limit, the controller may not allow the movement. If it is determined that extending or retracting the actuators is within their respective attitude limits, the method may comprise controlling extension of each the actuators 26, based on the attitude signal, to move the chassis 13 towards horizontal. This may include extending some actuators 26, retracting some actuators 26, or not moving some actuators 26. The method may thereby form a separate attitude feedback loop, where each of the actuators 26 may have a different attitude position.

The height feedback loop of Figure 4 and the attitude feedback loop may run simultaneously and concurrently so that both height and attitude of the chassis 13 can be adjusted in real time to reflect prevailing conditions. For example, the height feedback loop may run every few seconds, such as every 2.5 second, and the attitude feedback loop may run much more frequently, such as 10 times per second. It will be appreciated that the timing and frequency of the height feedback loop and the attitude feedback loop may be independently controlled from one another, and may be any suitable timing and frequency.

Calibrating the actuators 26 to zero attitude, and incrementally extending or retracting the actuators 26 up to a positive attitude limit and a negative attitude limit enables the attitude of the chassis 13 to be independently controlled from the height of the chassis 13, whilst limiting encroachment of attitude control into the ability of the mobile autonomous agricultural system 10 to control the mobile unit 12 height. Calibrating the actuators 26 to zero height, and incrementally extending or retracting the actuators up to a positive height limit and a negative height limit enables the height of the chassis 13 to be independently controlled from the attitude of the chassis 13, whilst limiting encroachment of height control into the ability of the mobile autonomous agricultural system 10 to control the attitude of the mobile unit 12.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

Specific aspects of the present disclosure are presented in the following numbered clauses:
Clause 1. A mobile autonomous agricultural system comprising:
   a powered mobile unit for carrying agricultural equipment, and configured to move along rows of crops;
   the powered mobile unit comprising a chassis extending along a longitudinal axis defining an inner zone to receive the row of crops, and an actuator which is moveable between a fully extended position and a fully retracted position to respectively raise or lower the height of the chassis above the ground;
   at least one distance sensor disposed on the powered mobile unit and configured output respective distance signals relating to the distance of objects from the respective distance sensor;
   a controller configured to receive the distance signals, and to control extension of each of the actuators to control the height of the powered mobile unit based on the distance signals.
Clause 2. A mobile autonomous agricultural system according to Clause 1, comprising a plurality of actuators;
   wherein the chassis is supported by a plurality of wheel units, wherein each wheel unit comprises a wheel and one of the plurality of actuators, wherein the respective actuator is disposed between the wheel and a wheel base of the chassis.
Clause 3. A mobile autonomous agricultural system according to any preceding clause, wherein each wheel unit comprises a suspension assembly, the suspension assembly comprising a suspension unit with a passive spring around a shock absorber coupled to the wheel, and a linear actuator configured to move the suspension unit relative to the chassis of the mobile unit to thereby move the wheel relative to the wheel base of the chassis independently of the suspension unit.
Clause 4. A mobile autonomous agricultural system according to Clause 3, wherein the suspension assembly further comprises a four-bar linkage comprising a base, an input link, a coupler link and a follower link with the base and the coupler link on opposing sides of the four-bar linkage, wherein the wheel is fixed to the coupler link, and wherein the linear actuator is coupled between the base and the input link such that extension of the linear actuator moves the coupler link, and thereby the wheel, away from the wheel based of the chassis and retraction of the linear actuator moves the coupler link, and thereby the wheel, towards the wheel base of the chassis.
Clause 5. A mobile autonomous agricultural system according to any preceding clause, wherein the at least one distance sensor is disposed on the powered mobile unit to face into the inner section of the chassis, to sense internal objects within the inner section of the chassis.
Clause 6. A mobile autonomous agricultural system according to any preceding clause, comprising at least two distance sensors, wherein the controller is configured to determine an average distance signal based on the distance signals received from the distance sensor, and to control the actuators to control the height of the powered mobile unit based on the average distance signal.
Clause 7. A mobile autonomous agricultural system according to Clause 6, wherein the average distance signal is calculated based only on distance signals that are below an outlier threshold.
Clause 8. A mobile autonomous agricultural system according to any preceding clause, wherein the controller is configured to control the actuators to extend when it is determined that the distance signals are below a first threshold, to raise the height of the chassis.
Clause 9. A mobile autonomous agricultural system according to any preceding clause, wherein the controller is configured to control the actuators to retract when it is determined that the distance signals are above a second threshold, to lower the height of the chassis.
Clause 10. A mobile autonomous agricultural system according to Clause 8 or 9, wherein the first threshold is smaller than the second threshold.
Clause 11. A mobile autonomous agricultural system according to any preceding clause, wherein controlling the extension of the actuators comprises controlling the actuators to incrementally extend or retract by a predefined first length to adjust the height of the chassis, and repeating receiving the distance signals and controlling the extension in a height feedback loop to control the height of the chassis.
Clause 12. A mobile autonomous agricultural system according to any preceding clause, wherein the actuators each comprise a travel defined by the change in length between the fully extended position and the fully retracted position, and wherein the control of extension of the actuators to control the height of the chassis is limited to a central portion of the travel.
Clause 13. A mobile autonomous agricultural system according to any preceding clause, wherein the controller is calibrated to zero height when the actuator is between the fully extended position and the fully retracted position, and wherein an actuator height is defined as a negative height position if it is retracted from zero height and a positive height position if it is extended from zero height.
Clause 14. A mobile autonomous agricultural system according to Clause 12 or Clause 13, wherein the controller is configured to limit extension of the actuator, defined as a positive height limit from zero height, and retraction of the actuator, defined as a negative height limit from zero height, to control the height of the chassis.
Clause 15. A mobile autonomous agricultural system according to any preceding clause, further comprising an attitude sensor configured to output an attitude signal relating to the attitude of the powered mobile unit with respect to the horizontal; and
   wherein the controller is configured to receive the attitude signal and to control the extension of the actuator based on the attitude signal and distance signals to control an attitude of the chassis with respect to the horizontal and control the height of the chassis.
Clause 16. A mobile autonomous agricultural system according to clause 15, wherein the controller is configured to determine a pitch offset and/or a roll offset relative to a horizontal plane based on the attitude signals, and to control the attitude of the chassis based on the pitch offset and/or the roll offset.
Clause 17. A mobile autonomous agricultural system according to Clause 15 or Clause 16, wherein the controller is configured to:
   determine a nominal height of the actuators based on the current height plus an incremental change of height based on the distance signal, and wherein, for each actuator individually, the controller is configured to:
   determine a respective roll offset and/or a respective pitch offset,
   determine a nominal position for each actuator based on the nominal height, the respective pitch offset and/or the respective roll offset, and
   control the respective actuator to the nominal position..
Clause 18. A mobile autonomous agricultural system according to claim 17, wherein the controller is configured to determine whether the respective nominal position for each actuator is outside the travel limit of the actuator and to adjust the nominal height of the actuators to limit the nominal position to a travel limit of the actuator.
Clause 19. A mobile autonomous agricultural system according to Clause 17 or Clause 18, wherein the respective roll offset and/or the pitch offset for each actuator is compared to an angle step limit, wherein if the roll offset and/or the pitch offset is above the angle step limit, the respective roll offset and/or pitch offset is modified to the angle step limit.
Clause 20. A mobile autonomous agricultural system according to any preceding clause, comprising at least two distance sensors, wherein the at least two distance sensors are disposed on opposing sides of a centreline of the chassis, parallel to the longitudinal axis, and have at least partially overlapping detection envelopes.
Clause 21. A mobile autonomous agricultural system according to any preceding clause, comprising at least two pairs of distance sensors, including a pair of front distance sensors at a front end of the chassis, and a pair of back distance sensors at a back end of the chassis, wherein the front end of the chassis and the back end of the chassis are at opposing ends along the longitudinal axis of the chassis.
Clause 22. A mobile autonomous agricultural system according to any preceding clause, wherein the inner zone of the chassis defines a tunnel extending along the longitudinal axis, and wherein extension and retraction of the actuator is configured to respectively raise or lower the height of the tunnel above the ground.
Clause 23. A mobile autonomous agricultural system according to any preceding clause, wherein there are a plurality of distance sensors disposed on the powered mobile unit to face away from the inner section of the chassis, to sense external objects outside of the inner section of the chassis.
Clause 24. A method of controlling a mobile autonomous agricultural system according to any preceding clause, the method comprising:
   receiving at least one distance signal relating to the distance of objects from respective distance sensors; and
   controlling extension of each of the actuators to control the height of the powered mobile unit based on the distance signals.
Clause 25. A method of controlling a mobile autonomous agricultural system according to Clause 24, comprising:
   receiving at least two distance signals and determining an average distance signal based on the received distance signals; and
   controlling extension of each of the actuators to control the height of the powered mobile unit based on the average distance signal.
Clause 26. A method of controlling a mobile autonomous agricultural system according to Clause 25, wherein the average distance signal is calculated based only on the distance signals that are below an outlier threshold.
Clause 27. A method of controlling a mobile autonomous agricultural system according to any of Clauses 24-26, comprising controlling the actuators to extend when it is determined that the distance signals are below a first threshold, to raise the height of the chassis.
Clause 28. A method of controlling a mobile autonomous agricultural system according to any of Clauses 24-27, comprising controlling the actuators to retract when it is determined that the distance signals are above a second threshold, to lower the height of the chassis.
Clause 29. A method of controlling a mobile autonomous agricultural system according to Clause 27 or Clause 28, comprising:
   calibrating the controller to zero height when the actuator is between the fully extended position and the fully retracted position, and defining an actuator height a negative height position if it is retracted from zero height and a positive height position if it is extended from zero height;
   wherein, before controlling the actuators to extend or retract to control the height of the chassis, determine whether such control is within a positive height limit or a negative height limit from zero height,
   if it is determined that the control is within the positive height limit or the negative height limit from zero height, controlling the actuator to extend or retract, and
   is it is determined that the control is not within the positive height limit or the negative height limit from zero height, controlling the actuator to maintain position to limit the extension or retraction up to the positive height limit and down to the negative height limit for controlling the height of the chassis.
Clause 30. A method of controlling a mobile autonomous agricultural system according to any of Clauses 24-29, wherein controlling the extension of the actuators comprises controlling the actuators to incrementally extend or retract by a predefined first length to adjust the height of the chassis, and repeating receiving the distance signals and controlling the extension in a height feedback loop to control the height of the chassis.
Clause 31. A method of controlling a mobile autonomous agricultural system according to any of Clauses 24-30, comprising:
   receiving an attitude signal from an attitude sensor relating to the attitude of the powered mobile unit with respect to the horizontal; and
   controlling the extension of the actuator based on the attitude signal and distance signals to control an attitude of the chassis with respect to the horizontal and control the height of the chassis.
Clause 32. A method of controlling a mobile autonomous agricultural system according to Clause 31, comprising:
   determining a pitch offset and/or determining a roll offset relative to a horizontal plane based on the attitude signals;
   controlling the attitude of the chassis based on the pitch offset and/or the roll offset.
Clause 33. A method according to Clause 32, comprising:
   determining a nominal height of the actuators based on the current height plus an incremental change of height based on the distance signal, and wherein, for each actuator individually, the method comprises:
   determining a respective roll offset and/or a respective pitch offset,
   determining a nominal position for each actuator based on the nominal height, the respective pitch offset and/or the respective roll offset, and
   controlling the respective actuator to the nominal position.
Clause 34. A method according to Clause 33, comprising determining whether the respective nominal position for each actuator is outside the travel limit of the actuator and to adjust the nominal height of the actuators to limit the nominal position to a travel limit of the actuator
Clause 35. A method according to Clause 33 or 34, comparing the respective roll offset and/or the pitch offset for each actuator to an angle step limit, wherein if the roll offset and/or the pitch offset is above the angle step limit, modifying the respective roll offset and/or pitch offset to the angle step limit.

## Claims

1. A mobile autonomous agricultural system comprising:
a powered mobile unit for carrying agricultural equipment, and configured to move along rows of crops;
the powered mobile unit comprising a chassis extending along a longitudinal axis defining an inner zone to receive the row of crops, and an actuator which is moveable between a fully extended position and a fully retracted position to respectively raise or lower the height of the chassis above the ground;
at least one distance sensor disposed on the powered mobile unit and configured output respective distance signals relating to the distance of objects from the respective distance sensor;
a controller configured to receive the distance signals, and to control extension of each of the actuators to control the height of the powered mobile unit based on the distance signals.

2. A mobile autonomous agricultural system according to claim 1, comprising a plurality of actuators;
wherein the chassis is supported by a plurality of wheel units, wherein each wheel unit comprises a wheel and one of the plurality of actuators, wherein the respective actuator is disposed between the wheel and a wheel base of the chassis.

3. A mobile autonomous agricultural system according to claim 1 or 2, wherein each wheel unit comprises a suspension assembly, the suspension assembly comprising a suspension unit with a passive spring around a shock absorber coupled to the wheel, and a linear actuator configured to move the suspension unit relative to the chassis of the mobile unit to thereby move the wheel relative to the wheel base of the chassis independently of the suspension unit, optionally,
wherein the suspension assembly further comprises a four-bar linkage comprising a base, an input link, a coupler link and a follower link with the base and the coupler link on opposing sides of the four-bar linkage, wherein the wheel is fixed to the coupler link, and wherein the linear actuator is coupled between the base and the input link such that extension of the linear actuator moves the coupler link, and thereby the wheel, away from the wheel based of the chassis and retraction of the linear actuator moves the coupler link, and thereby the wheel, towards the wheel base of the chassis.

4. A mobile autonomous agricultural system according to any preceding claim, wherein the at least one distance sensor is disposed on the powered mobile unit to face into the inner section of the chassis, to sense internal objects within the inner section of the chassis.

5. A mobile autonomous agricultural system according to any preceding claim, further comprising an attitude sensor configured to output an attitude signal relating to the attitude of the powered mobile unit with respect to the horizontal; and
wherein the controller is configured to receive the attitude signal and to control the extension of the actuator based on the attitude signal and distance signals to control an attitude of the chassis with respect to the horizontal and control the height of the chassis, optionally,
wherein the controller is configured to determine a pitch offset and/or a roll offset relative to a horizontal plane based on the attitude signals, and to control the attitude of the chassis based on the pitch offset and/or the roll offset.

6. A mobile autonomous agricultural system according to claim 5, wherein the controller is configured to:
determine a nominal height of the actuators based on the current height plus an incremental change of height based on the distance signal, and wherein, for each actuator individually, the controller is configured to:
determine a respective roll offset and/or a respective pitch offset,
determine a nominal position for each actuator based on the nominal height, the respective pitch offset and/or the respective roll offset, and
control the respective actuator to the nominal position.

7. A mobile autonomous agricultural system according to any preceding claim, comprising:
at least two distance sensors, wherein the at least two distance sensors are disposed on opposing sides of a centreline of the chassis, parallel to the longitudinal axis, and have at least partially overlapping detection envelopes, and/or
at least two pairs of distance sensors, including a pair of front distance sensors at a front end of the chassis, and a pair of back distance sensors at a back end of the chassis, wherein the front end of the chassis and the back end of the chassis are at opposing ends along the longitudinal axis of the chassis.

8. A mobile autonomous agricultural system according to any preceding claim, wherein the inner zone of the chassis defines a tunnel extending along the longitudinal axis, and wherein extension and retraction of the actuator is configured to respectively raise or lower the height of the tunnel above the ground, and/or
wherein there are a plurality of distance sensors disposed on the powered mobile unit to face away from the inner section of the chassis, to sense external objects outside of the inner section of the chassis.

9. A method of controlling a mobile autonomous agricultural system according to any preceding claim, the method comprising:
receiving at least one distance signal relating to the distance of objects from respective distance sensors; and
controlling extension of each of the actuators to control the height of the powered mobile unit based on the distance signals,
optionally further comprising:
receiving at least two distance signals and determining an average distance signal based on the received distance signals; and
controlling extension of each of the actuators to control the height of the powered mobile unit based on the average distance signal., optionally,
wherein the average distance signal is calculated based only on the distance signals that are below an outlier threshold.

10. A method of controlling a mobile autonomous agricultural system according to claim 9, comprising:
controlling the actuators to extend when it is determined that the distance signals are below a first threshold, to raise the height of the chassis, and/or,
controlling the actuators to retract when it is determined that the distance signals are above a second threshold, to lower the height of the chassis.

11. A method of controlling a mobile autonomous agricultural system according to claim 9 or 10, comprising:
calibrating the controller to zero height when the actuator is between the fully extended position and the fully retracted position, and defining an actuator height a negative height position if it is retracted from zero height and a positive height position if it is extended from zero height;
wherein, before controlling the actuators to extend or retract to control the height of the chassis, determine whether such control is within a positive height limit or a negative height limit from zero height,
if it is determined that the control is within the positive height limit or the negative height limit from zero height, controlling the actuator to extend or retract, and
is it is determined that the control is not within the positive height limit or the negative height limit from zero height, controlling the actuator to maintain position to limit the extension or retraction up to the positive height limit and down to the negative height limit for controlling the height of the chassis.

12. A method of controlling a mobile autonomous agricultural system according to any of claims 9-11, wherein controlling the extension of the actuators comprises controlling the actuators to incrementally extend or retract by a predefined first length to adjust the height of the chassis, and repeating receiving the distance signals and controlling the extension in a height feedback loop to control the height of the chassis.

13. A method of controlling a mobile autonomous agricultural system according to any of claims 9-12, comprising:
receiving an attitude signal from an attitude sensor relating to the attitude of the powered mobile unit with respect to the horizontal; and
controlling the extension of the actuator based on the attitude signal and distance signals to control an attitude of the chassis with respect to the horizontal and control the height of the chassis.

14. A method of controlling a mobile autonomous agricultural system according to claims 13, comprising:
determining a pitch offset and/or determining a roll offset relative to a horizontal plane based on the attitude signals;
controlling the attitude of the chassis based on the pitch offset and/or the roll offset.

15. A method according to claim 14, comprising:
determining a nominal height of the actuators based on the current height plus an incremental change of height based on the distance signal, and wherein, for each actuator individually, the method comprises:
determining a respective roll offset and/or a respective pitch offset,
determining a nominal position for each actuator based on the nominal height, the respective pitch offset and/or the respective roll offset, and
controlling the respective actuator to the nominal position,
optionally further comprising:
determining whether the respective nominal position for each actuator is outside the travel limit of the actuator and to adjust the nominal height of the actuators to limit the nominal position to a travel limit of the actuator, and/or
comparing the respective roll offset and/or the pitch offset for each actuator to an angle step limit, wherein if the roll offset and/or the pitch offset is above the angle step limit, modifying the respective roll offset and/or pitch offset to the angle step limit.
